# EUROPEAN PATENT SPECIFICATION

(11) **EP 3 740 527 B1**
(45) Date of publication and mention of the grant of the patent: **21.10.2026**
(21) Application number: 19738234.4
(22) Date of filing: 15.01.2019
(51) Int. Cl.: C09D 175/06, C08J 5/18, B32B 27/20, B32B 27/40, C08K 3/22, C08K 3/36, C08K 7/18, C08L 1/10, C08L 75/04, C09D 101/10, C09D 175/04, C09D 183/06, C08J 7/04, B32B 23/20, B32B 27/12, C08G 18/10, C08G 18/44, C08G 18/61, C08G 18/76, B32B 27/08

(54) **SCRATCH RESISTANT FILM**
KRATZFESTE FOLIE
FILM RÉSISTANT AUX RAYURES

(30) Priority: 15.01.2018 JP 2018004034
(43) Date of publication of application: 25.11.2020
(73) Proprietor: 3M Innovative Properties Company, Saint Paul, Minnesota 55133-3427 (US)
(72) Inventor: KONDO, Shinsuke, Tokyo 141--8684 (JP); SUGIYAMA, Naota, Tokyo 141--8684 (JP); TAKEDA, Yoshihiko, Tokyo 141--8684 (JP); SATO, Tatsuya, Tokyo 141--8684 (JP)
(74) Representative: Vossius & Partner Patentanwälte Rechtsanwälte mbB
(86) International application number: PCT/IB2019/050320
(87) International publication number: WO 2019/138397

(56) References cited:
- WO-A1-2014/081004
- JP-A- 2001 335 752
- JP-A- 2008 238 602
- JP-A- 2017 159 544
- JP-A- H11 227 116
- US-A1- 2013 041 091
- BAUER ET AL: "UV curing and matting of acrylate coatings reinforced by nano-silica and micro-corundum particles", PROGRESS IN ORGANIC COATINGS, ELSEVIER BV, NL, vol. 60, no. 2, 1 September 2007 (2007-09-01), pages 121 - 126, XP022284406, ISSN: 0300-9440, DOI: 10.1016/J.PORGCOAT.2007.07.005
- HARUEHANSAPONG SATTAWAT ET AL: "Effect of Nanosilica Particle Size on the Water Permeability, Abrasion Resistance, Drying Shrinkage, and Repair Work Properties of Cement Mortar Containing Nano-SiO 2", vol. 2017, 2 January 2017 (2017-01-02), US, pages 1 - 11, XP055830630, ISSN: 1687-8434, Retrieved from the Internet <URL:https://downloads.hindawi.com/journals/amse/2017/4213690.pdf> DOI: 10.1155/2017/4213690

## Description

### Technical Field

The present disclosure relates to a scratch resistant film that can be used for purposes such as decoration.

### Background Art

Decorative films have been used for the purposes of decoration of the interior and exterior of buildings, vehicles, and the like. For example, decorative films in which a polyvinyl chloride film having a printed layer and a transparent polyvinyl chloride film are laminated and which have been subjected to emboss finishing are known. Various material textures, such as woodgrain, metallic, textile, and marble textures, can be expressed by using various combinations of lamination and emboss finishing.

For example, Patent Document 1 (JP 2011-516299 T) describes "a decorative sheet comprising (i) a substrate layer, (ii) a scratch resistant layer including a transparent resin layer and hard particles dispersed in the transparent layer; wherein an average particle diameter of the hard particles is greater than a thickness of the transparent resin layer; an amount of the hard particles is from 30 to 400 parts by weight per 100 parts by weight of the transparent resin layer; and an area ratio of portions where the hard particles protrude by 3 micrometers or more from an external surface of the transparent resin layer is from 10% to 80% of the scratch resistant layer".

Patent Document 2 (US 8,187,695 Specification) describes a molded sheet including, on a substrate, at least an ink layer provided over the entire surface, and a surface molded layer which is present on the ink layer and makes contact with the ink layer while covering the entire surface of the ink layer; wherein the surface molded layer is a crosslink-cured product of a curable resin composition; and a surface of the surface molded layer has an uneven shape.
In PROGRESS IN ORGANIC COATINGS; Elsevier BV, NL, vol, 60, no. 2, pages 121-126 Bauer et al. describe "UV curing and matting of acrylate coatings reinforced by nano-silica and micro-corundum particles".

### Citation List

### Patent Literature

Patent Document 1: JP 2011-516299 T
Patent Document 2: US 8,187,695 Specification
WO 2014/081004 A1 describes an active energy ray-curable resin composition, a coating agent composition and a laminate.

### Summary of Invention

### Technical Problem

In recent years, there has been a demand for films that have an appearance with less gloss and that can reproduce surfaces of dry-finished wood, matte coating, and the like. Known methods include forming a decorative film having a low gloss appearance by coating with a resin containing microparticles or beads to form a surface layer. These decorative films can be used for exterior or interior of buildings, interior of vehicles, furniture, decoration of articles, and the like. Decorative films are preferably scratch resistant so that the decorative properties are not diminished by friction or impact from another article during use in these applications.

However, decorative films having a low gloss appearance have unevenness caused by microparticles or beads, and the fine uneven surface is easily deformed or damaged due to scratching with fingernails, articles, or the like, for example, which often causes the low gloss to be lost. It is therefore very difficult to achieve both a low gloss appearance and scratch resistance in a decorative film.

The present disclosure relates to a film having a low gloss appearance and excellent scratch resistance.

### Solution to Problem

The present invention provides a scratch resistant film as defined in the appended claims set.

### Advantageous Effects of Invention

Because the film of the present disclosure has a low gloss appearance and excellent scratch resistance, the film can be suitably used for the interior or exterior of buildings, vehicles, or the like.

Note that the above descriptions should not be construed to be a disclosure of all of the embodiments and benefits of the present disclosure. The scope of the invention is defined by the appended claims.

### Brief Description of Drawings

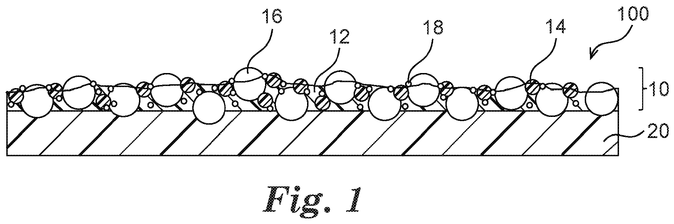

FIG. 1 is a schematic cross-sectional view of a scratch resistant film according to an embodiment of the present disclosure.

### Description of Embodiments

Hereinafter, representative embodiments of the present disclosure will be described in more detail. However, the present disclosure is not limited to these embodiments.

In the present disclosure, "transparent" refers to a condition where the total light transmittance in the wavelength range of 400 to 700 nm of a material or article is approximately 85% or greater. "Translucent" refers to a condition where the total light transmittance in the wavelength range of 400 to 700 nm of a material or article is approximately 20% or greater but approximately less than 85%. "Opaque" refers to a condition where the total light transmittance in the wavelength range of 400 to 700 nm of a material or article is approximately less than 20%. The total light transmittance can be determined in accordance with JIS K 7361-1:1997 (ISO 13468-1:1996).

According to the invention, the film has a scratch resistant surface layer containing a binder containing a urethane resin, urethane resin beads having an average particle diameter of 3 µm to 30 µm, hard particles having an average particle diameter of 5 µm to 45 µm; and nanosilica particles. The surface layer contains the hard particles in an amount of 30 parts by mass to 500 parts by mass per 100 parts by mass of the binder. The gloss of surface layer is not greater than approximately 5.5 GU at 60 degrees. A film with the surface layer containing urethane resin beads having an average particle diameter within the range described above, a prescribed amount of hard particles having an average particle diameter within the range described above, and nanosilica particles has a low gloss appearance and scratch resistance.

A schematic cross-sectional view of the film of the present disclosure is illustrated in FIG. 1. The film 100 of FIG. 1 has a surface layer 10 and a substrate layer 20 which is an optional component. The film 100 may also be formed from only the surface layer 10; that is, the surface layer 10 itself may be a film. The surface layer 10 contains a binder 12 containing a urethane resin, urethane resin beads 14, hard particles 16, and nanosilica particles 18.

The binder contains a urethane resin. Various publicly known urethane resins can be used as the urethane resin. The urethane resin can be obtained by drying or curing a urethane resin composition. The urethane resin composition may be an aqueous or non-aqueous system. It is advantageous that the urethane resin is a cured product of a two-part urethane resin composition. The two-part urethane resin composition is typically a non-aqueous urethane resin composition. Use of the two-part urethane resin composition forms a chemical bond between other components in the surface layer such as urethane resin beads, hard particles, and nanosilica particles, for example and the urethane resin during the formation of the surface layer, and such use can prevent or suppress shedding of these particles from the surface layer and/or bleeding out of the components.

The two-part urethane resin composition typically contains a polyol as a main agent and a multi-functional isocyanate as a curing agent and, as necessary, a catalyst and/or a solvent.

As the polyol, polyester polyols, such as polycaprolactone diol and polycaprolactone triol; polycarbonate polyols, such as cyclohexanedimethanol carbonate and 1,6-hexanediol carbonate; and combinations of these can be used. These polyols can impart transparency, weather resistance, strength, chemical resistance, and the like to the surface layer. In particular, the polycarbonate polyol can form a surface layer having high transparency and chemical resistance. From the perspective of imparting stretchability on the surface layer while excessive degree of crosslinked structure is not formed, the polyol is preferably a diol, and polyester diols and polycarbonate diols, especially polycarbonate diols, can be advantageously used.

The OH value of the polyol may be 10 mg/KOH or greater, 20 mg/KOH or greater, or 30 mg/KOH or greater, but 150 mg/KOH or less, 130 mg/KOH or less, or 120 mg/KOH or less.

Examples of the multi-functional isocyanate include aliphatic polyisocyanates, alicyclic polyisocyanates, aromatic polyisocyanates, and aromatic aliphatic polyisocyanates, and multimers (dimers, trimers, and the like), biuret-modified products, allophanate-modified products, polyol-modified products, oxadiazine trione-modified products, and carbodiimide-modified products of these polyisocyanates. From the perspective of imparting stretchability to the surface layer while excessive degree of crosslinked structure is not formed, the multi-functional isocyanate is preferably diisocyanate. Examples of such diisocyanate include aliphatic diisocyanates, such as tetramethylene diisocyanate and hexamethylene diisocyanate (HDI); alicyclic diisocyanates, such as isophorone diisocyanate, trans, trans- and trans,cis- and cis,cis-dicyclohexylmethane-4,4'-diisocyanate and mixtures of these (hydrogenated MDI); aromatic diisocyanates, such as 2,4-tolylene diisocyanate and 2,6-tolylene diisocyanate, and isomeric mixtures of these tolylene diisocyanate (TDI), 4,4'-diphenylmethane diisocyanate, 2,4'-diphenylmethane diisocyanate, 2,2'-diphenylmethane diisocyanate, and isomeric mixtures of these diphenylmethane diisocyanate (MDI); aromatic-aliphatic diisocyanates, such as 1,3- or 1,4-xylylene diisocyanate or mixtures thereof (XDI), and 1,3- or 1,4-tetramethylxylylene diisocyanate or mixtures thereof (TMXDI).

As the equivalent weight ratio of the polyol to the polyisocyanate, the equivalent weight of the polyisocyanate may be 0.6 equivalents or greater, 0.7 equivalents or greater, but 2 equivalents or less, or 1.2 equivalents or less, per 1 equivalent of the polyol.

As the catalyst, catalysts that are typically used in formation of urethane resins, such as di-n-butyltin dilaurate, zinc naphthenate, zinc octenoate, and triethylenediamine, can be used. The content of the catalyst is 0.005 parts by mass or greater, or 0.01 parts by mass or greater, but 0.5 parts by mass or less, or 0.2 parts by mass or less, per 100 parts by mass of the two-part urethane resin composition.

The binder may further contain a cellulose ester. Inclusion of a cellulose ester in the binder can increase the viscosity of the binder during the drying process and decrease the surface fluidity. As a result, a binder precursor containing the urethane resin beads, hard particles, and the like can be uniformly coated. Examples of the cellulose ester include cellulose acetate propionate and cellulose acetate butyrate.

The molecular weight of the cellulose ester may be 12000 or greater, 16000 or greater, or 20000 or greater, but 110000 or less, 100000 or less, or 90000 or less, taking the solubility in the solvent into consideration.

The glass transition temperature (Tg) of the cellulose ester may be 85°C or higher, 96°C or higher, or 101°C or higher, but 190°C or lower, 180°C or lower, or 160°C or lower, taking the capability of maintaining the shape at the used temperature into consideration.

In some embodiments, 5 parts by mass or greater, 10 parts by mass or greater, or 15 parts by mass or greater, but 35 parts by mass or less, 30 parts by mass or less, or 25 parts by mass or less, per 100 parts by mass of the binder, of the cellulose ester may be contained in the binder. The content of the cellulose ester within the range described above can impart a uniform, low gloss appearance and scratch resistance to the surface layer due to the uniform dispersion of the urethane resin beads and hard particles in the surface layer.

The surface layer of the present embodiment contains urethane resin beads. The urethane resin beads can form fine recesses and protrusions on the film surface due to the presence of the beads and can form a low gloss structure on the film surface. Furthermore, because the urethane resin beads have good affinity to the binder containing the urethane resin, the urethane resin beads exhibit high adhesion to the binder. As a result, shedding of the urethane resin beads from the binder can be suppressed in the case where the film is stretched or deformed.

As the urethane resin beads, crosslinked polyurethane microparticles obtained via suspension polymerization, seed polymerization, emulsion polymerization, or the like can be used. The urethane resin beads have excellent flexibility, toughness, scratch resistance, and the like, and these characteristics can be imparted to the surface layer.

The average particle diameter of the urethane resin beads is 3 µm or greater but 30 µm or less. In some embodiments, the average particle diameter of the urethane resin beads may be 5 µm or greater, or 10 µm or greater, but 25 µm or less, or 20 µm or less. When the average particle diameter of the urethane resin beads is not less than approximately 3 µm, the whitening of the film surface due to the scattering of light can be suppressed. When the average particle diameter of the urethane resin beads is not greater than 30 µm, gloss can be suppressed, and low gloss can be imparted to the surface layer. The urethane resin beads having the average particle diameter within the range described above can impart low lightness, i.e., low gloss with less whiteness, to the surface layer by appropriately scattering the incident light to the surface layer.

The urethane resin beads are contained in the surface layer in an amount of 13 to 120 parts by mass or greater, preferably 15 parts by mass or greater, or 20 parts by mass or greater, but 120 parts by mass or less, 110 parts by mass or less, or 100 parts by mass or less, per 100 parts by mass of the binder. By setting the content of the urethane resin beads to not less than 13 parts by mass, low gloss can be imparted to the surface layer, and whitening can be suppressed by setting the content to not greater than 120 parts by mass. The content of the urethane resin beads within the range described above can provide a surface layer that exhibits low gloss in a wide visual angle, e.g. from 20 degrees to 85 degrees.

The surface layer of the present embodiment further contains hard particles. The hard particles impart scratch resistance to the surface layer.

Particles containing alumina, silica, chromium oxide, iron oxide, zirconium, titanium, or a mixture of at least two thereof may be used as hard particles. In one embodiment, the hard particles contain alumina. The shape of the hard particles may be, but is not limited to, a spherical shape, a plume shape, a prolate spheroid shape, a needle shape, a polyhedron shape, a cylindrical shape, or amorphous shape. Higher scratch resistance can be achieved by using spherical hard particles. In one embodiment, the hard particles contain alumina spherical particles (alumina beads).

The hardness of the hard particles is 7 or greater, preferably 9 or greater but 15 or less or 13 or less in terms of the modified Mohs hardness.

The average particle diameter of the hard particles is from 5 µm to 45 µm. In some embodiments, the average particle diameter of the hard particles may be 10 µm or greater, or 15 µm or greater, but 40 µm or less, or 35 µm or less. By setting the average particle diameter of the hard particles to not less than 5 µm, scratch resistance can be imparted to the surface layer. By setting the average particle diameter of the hard particles to not greater than 45 µm, gloss caused by the hard particles can be suppressed, and low gloss can be imparted to the surface layer. The average particle diameter of the hard particles can be measured using a Multisizer (trade name) (Beckman Coulter, Koto-ku, Tokyo, Japan) precision particle size distribution measuring device employing the electrical sensing zone method.

In some embodiments, the ratio of the average particle diameter of the hard particles to the average particle diameter of the urethane resin beads (average particle diameter of the hard particles/average particle diameter of the urethane resin beads) may be not less than 1, not less than 1.2, or not less than 1.4 and not greater than 10, not greater than 9, or not greater than 8. By setting the average particle diameter of the hard particles to be equal to or greater than the average particle diameter of the urethane resin beads, any external force applied to the surface layer by fingernails, articles, or the like preferentially acts on the hard particles over the urethane resin beads, so the scratch resistance of the surface layer can be increased, and the low gloss of the surface layer can be maintained by suppressing the shedding of the urethane resin beads.

In one embodiment, the average particle diameter of the hard particles is not less than the minimum thickness of the surface layer. In this embodiment, the scratch resistance of the surface layer can be increased further by increasing the number of hard particles protruding from the surface layer. In some embodiments, the average particle diameter of the hard particles may be set to not less than 1.1 times, not less than 1.2 times, or not less than 1.3 times and not more than 2 times, not more than 1.8 times, or not more than 1.7 times the minimum thickness of the surface layer. By setting the average particle diameter of the hard particles to not less than 1.1 times the minimum thickness of the surface layer, the number of hard particles protruding from the surface layer can be increased and the scratch resistance of the surface layer can be increased further, and by setting the average particle diameter of the hard particles to not more than 2 times the minimum thickness of the surface layer, the shedding of hard particles from the surface layer can be suppressed effectively.

The hard particles are contained in the surface layer in an amount of 30 parts by mass to 500 parts by mass per 100 parts by mass of the binder. In some embodiments, the hard particles may be contained in the surface layer in an amount of not less than 50 parts by mass, or not less than 70 not less than approximately and not greater than 500 parts by mass, not greater than 400 parts by mass, or not greater than 300 parts by mass per 100 parts by mass of the binder. By setting the content of the hard particles to not less than 30 parts by mass, high scratch resistance can be imparted to the surface layer. By setting the content of the hard particles to not greater than 500 parts by mass, excessive increases in the haze value of the surface layer caused by the hard particles can be suppressed. By suppressing excessive increases in the haze value of the surface layer, decorations such as color, printing, or patterns can be made clearly visible through the surface layer in a film having such decorations underneath the surface layer. By setting the content of the hard particles to not greater than 400 parts by mass, the low gloss appearance can be maintained even when the film is stretched, and increases in lightness - that is, whitening - can be prevented or suppressed during 150% stretching, for example.

In some embodiments, the mass ratio of the hard particles to the urethane resin beads (content (parts by mass) of the hard particles/content (parts by mass) of the urethane resin beads) may be not less than 0.5, not less than 1.5, or not less than 3 and not greater than 10, not greater than 9, or not greater than 8. Setting the mass ratio of the hard particles and the urethane resin beads to within the range described above contributes to the provision of a low gloss appearance and scratch resistance.

In some embodiments, the total content of hard particles and urethane resin beads may be not less than 40 parts by mass, not less than 60 parts by mass, or not less than 70 parts by mass and not greater than 500 parts by mass, not greater than 400 parts by mass, or not greater than 300 parts by mass per 100 parts by mass of the binder. Setting the total content of hard particles and urethane resin beads to within the range described above contributes to the provision of a low gloss appearance and scratch resistance.

The surface layer of the present embodiment further contains nanosilica particles. The presence of the nanosilica particles in the binder suppresses change in low gloss, which tends to be caused when the film is stretched in the case where only the urethane resin beads are used, and thus can effectively prevent whitening of the film. The nanosilica particles also contribute to the suppression of the shedding of hard particles.

In the case of nanosilica particles, for example, a silica sol obtained using liquid glass (sodium silicate solution) as a starting material can be used. The surface of the nanosilica particles may be modified using a surface treatment agent, such as silane, alcohol, amine, carboxylic acid, sulfonic acid, phosphonic acid, and titanate.

In some embodiments, the average particle diameter of the nanosilica particles is 10 nm or greater, 20 nm or greater, or 30 nm or greater, but 100 nm or less, 75 nm or less, or 45 nm or less. As described above, using the nanosilica particles having extremely small size, the nanosilica particles can be highly dispersed in the surface layer. Even when the film is stretched, because the fine nanosilica particles are dispersed and remain in the stretched part, loss of low gloss can be suppressed and whitening of the film can be effectively prevented. The nanosilica particles that are present adjacent to the urethane resin beads or the hard particles may function as a sort of physical crosslinking point between the urethane resin beads or the hard particles and the binder. The presence of the nanosilica particles that may function as such physical crosslinking points suppresses shedding of the urethane beads and the hard particles when the film is stretched, and can maintain the scratch resistance of the film and effectively prevent whitening of the film.

The nanosilica particles are contained in the surface layer in an amount of 30 to 500 parts by mass, preferably not less than 35 parts by mass, or not less than 40 parts by mass and not greater than 500 parts by mass, not greater than 300 parts by mass, or not greater than 250 parts by mass per 100 parts by mass of the binder. By setting the content of the nanosilica particles to within the range described above, excellent scratch resistance can be imparted to the surface layer. By setting the content of the nanosilica particles to not more than 300 parts by mass, the low gloss appearance can be maintained even when the film is stretched, and increases in lightness - that is, whitening - can be prevented or suppressed during 150% stretching, for example.

The surface layer further contains a silicone-modified polymer having a functional group capable of reacting with isocyanates or a hydroxy group. When finger sebum is attached on the surface with low gloss, the trace thereof is easily visually observed. The fingerprint resistance of the surface layer can be enhanced by allowing the silicone-modified polymer having a functional group capable of reacting with isocyanates or a hydroxy group to be contained in the surface layer. The silicone-modified polymer can impart scratch resistance, due to smoothness, to the surface layer by reducing the friction coefficient of the surface layer. The isocyanate or hydroxy group of the silicone-modified polymer may be reacted with the hydroxy group or isocyanate group of the urethane resin in the binder or urethane resin beads, and the silicone-modified polymer may be bonded to the urethane resin or the urethane resin beads. In this embodiment, bleeding out from the surface layer of the silicone-modified polymer can be prevented or suppressed.

As the silicone-modified polymer having a functional group capable of reacting with isocyanates or a hydroxy group, a polyether-modified silicone, polyester-modified silicone, aralkyl-modified silicone, acryl-modified silicone, and silicone-modified polymer, such as a silicone-modified polyacrylate and urethane-modified silicone, can be used. Examples of the functional group capable of reacting with isocyanates or a hydroxy group of the silicone-modified polymer include a hydroxyl group, an amino group having active hydrogen, an isocyanate group, an epoxy group, and an acid anhydride group. From the perspective of achieving especially excellent fingerprint resistance, the silicone-modified polymer is advantageously a silicone-modified polyacrylate. The silicone-modified polymer preferably has a hydroxy group or an isocyanate group having high reactivity with an isocyanate or hydroxy group, and particularly preferably has a hydroxy group.

In some embodiments, the silicone-modified polymer having a functional group capable of reacting with isocyanates or a hydroxy group, e.g. a silicone-modified polyacrylate, may be contained in an amount of 0.1 parts by mass or greater, 1 parts by mass or greater, or 3 part by mass or greater, but 35 parts by mass or less, 25 parts by mass or less, or 20 parts by mass or less, per 100 parts by mass of the binder, in the surface layer. By setting the content of the silicon-modified polymer to within the range described above, the fingerprint resistance and/or scratch resistance of the surface layer can be further enhanced.

As other optional component(s), the surface layer may contain additive(s) such as fillers other than the urethane resin beads, the hard particles, and the nanosilica particles, UV absorbents, photostabilizers, thermal stabilizers, dispersants, plasticizers, flow enhancing agents, and leveling agents. Each and the total contents of these additives can be decided in the range that does not impair the characteristics required for the surface layer.

In one embodiment, the surface layer can be formed using a surface coating composition containing a binder precursor containing the urethane resin composition described above, urethane resin beads having an average particle diameter of 3 µm to 30 µm, hard particles having an average particle diameter of 5 µm to 45 µm, and nanosilica particles.

The binder precursor may contain the cellulose ester described above for the binder, in addition to the urethane resin composition. The cellulose ester can impart quick-drying properties, dry feeling when touched by a finger, flowability, leveling properties, or the like to the surface coating composition. The cellulose ester can be used for adjusting viscosity of the surface coating composition.

The surface coating composition may further contain a silicone-modified polymer having a functional group capable of reacting with isocyanates or a hydroxy group described above. The isocyanate or hydroxy group of the silicone-modified polymer can be reacted with the hydroxy group or isocyanate group of the urethane resin composition or urethane resin beads to bond the silicone-modified polymer with the urethane resin or the urethane resin beads. This can prevent or suppress bleeding out from the surface layer of the silicone-modified polymer. When the silicone-modified polymer is used, from the perspective of reactivity, it is advantageous that the urethane resin composition contains a two-part urethane resin composition.

The composition of the surface coating composition is as described for the surface layer. The same applies to contents of the cellulose ester, urethane resin beads, hard particles, nanosilica particles, and silicone-modified polymer having a functional group capable of reacting with isocyanates or a hydroxy group except for changing "100 parts by mass of the binder" as a reference to "100 parts by mass of the binder precursor".

To enhance workability, coatability, and the like, the surface coating composition may further contain a solvent, such as aromatic hydrocarbons of ketones, such as methyl ethyl ketone, methyl isobutyl ketone, and acetyl acetone, toluenes, xylenes, and the like; alcohols, such as ethanol and isopropyl alcohol; esters, such as ethyl acetate and butyl acetate; and ethers, such as tetrahydrofuran, propylene glycol monomethyl ether, propylene glycol monomethyl ether acetate (1-methoxy-2-propyl acetate), and dipropylene glycol monomethyl ether acetate. The content of the solvent in the surface coating composition is typically not less than approximately 10 parts by mass, not less than approximately 20 parts by mass, or not less than approximately 50 parts by mass and not greater than approximately 800 parts by mass, not greater than approximately 500 parts by mass, or not greater than approximately 300 parts by mass per 100 parts by mass of the binder precursor.

The viscosity of the surface coating composition is typically 20 mPa·s or greater, 50 mPa·s or greater, or 100 mPa·s or greater, but 1000 mPa·s or less, 800 mPa·s or less, or 600 mPa·s or less. The viscosity of the surface coating composition is measured using a B-type viscometer at a rotational speed of 60 rpm by selecting an appropriate spindle.

The surface layer can be formed by coating the substrate with the surface coating composition using knife coating, bar coating, blade coating, doctor coating, roll coating, cast coating, and the like and, as necessary, leaving to stand at room temperature or heating at 80°C to 150°C as necessary, and drying and/or curing. The surface layer may also be subjected to surface finishing such as emboss finishing.

The thickness of the surface layer may be, for example, 3 µm or greater, 5 µm or greater, or 10 µm or greater, but 50 µm or less, 30 µm or less, or 20 µm or less. In the present disclosure, the thickness of the surface layer refers to the thickness of the thickest portion, i.e., the maximum thickness.

In some embodiments, the surface layer is transparent or semi-transparent. In these embodiments, the total light transmittance in the wavelength range of 400 to 700 nm of the surface layer may be 80% or greater, 85% or greater, or 90% or greater. In these embodiments, decorations, such as printing, provided on the substrate can be visually observed through the surface layer.

The film may further contain a stretchable substrate layer as a substrate. As the stretchable substrate layer, at least one type of resin layer selected from the group consisting of polyvinyl chloride, polyurethane, polyethylene, polypropylene, vinyl chloride-vinyl acetate resins, acrylic resins, cellulose resins, and fluororesins can be used.

The stretchable substrate layer may be colored or colorless. The stretchable substrate layer may be opaque, semi-transparent, or transparent. The stretchable substrate layer may have a substantially smooth surface and may have a structured surface that can be formed by surface processing, such as embossing. By configuring the appearance or the shape of the stretchable substrate layer as described above, various decorative characteristics can be imparted to the film.

In an embodiment, the stretchable substrate layer contains a transparent polyvinyl chloride resin layer and a colored polyvinyl chloride resin layer. In the film of this embodiment, the colored polyvinyl chloride resin layer is supported or protected by the transparent polyvinyl chloride resin layer, and thus durability can be imparted to the decorative characteristics of the film. For example, the film of this embodiment can be suitably used for adhesion to interior materials or exterior materials of buildings or vehicles.

The thickness of the stretchable substrate layer may be, for example, 25 µm or greater, 50 µm or greater, or 80 µm or greater, but 5 mm or less, 1 mm or less, or 0.5 mm or less.

In some embodiments, the tensile elongation ratio of the stretchable substrate layer is 10% or greater, 20% or greater, or 30% or greater, and 400% or less, 350% or less, or 300% or less. The tensile elongation ratio of the stretchable substrate layer is a value calculated by preparing a sample having a width of 25 mm and a length of 150 mm and stretching the sample until the sample is broken using a tensile tester at a temperature of 20°C, a tensile test speed of 300 mm/min, and a grip spacing of 100 mm, using the equation: [grip spacing at the time of breaking (mm) - grip spacing before the stretching (mm) (= 100 mm)]/grip spacing before the stretching (mm) (= 100 mm) × 100 (%).

In some embodiments, the glass transition temperature (Tg) of the substrate layer is not lower than 50°C, not lower than 55°C, or not lower than 60°C and not higher than 80°C, not higher than 75°C, or not higher than 70°C. When a substrate layer having a glass transition temperature within the range described above is used, the embedding of hard particles in the substrate layer is accelerated when a pressing process such as emboss finishing is used, and the shedding of hard particles can thus be suppressed more effectively. The glass transition temperature of the substrate layer can be measured by differential thermal analysis (TDA).

The stretchable substrate layer may have an adhesive layer on the other side of the surface layer. Generally used adhesives such as solvent-type, emulsion-type, pressure-sensitive type, heat-sensitive type, and heat-curable or ultraviolet-curable type adhesives, including acrylics, polyolefins, polyurethanes, polyesters, rubbers, and the like can be used as the adhesive layer. The thickness of the adhesive layer may be typically 5 µm or greater, 10 µm or greater, or 20 µm or greater, but 100 µm or less, 80 µm or less, or 50 µm or less.

The surface of the adhesive layer may be provided with a liner. Examples of the liner include papers; plastic materials, such as polyethylene, polypropylene, polyester, and cellulose acetate; and papers coated with such plastic materials. These liners may have surfaces that have been subjected to release treatment using silicone or the like. The thickness of the liner is typically 5 µm or greater, 15 µm or greater, or 25 µm or greater, but 500 µm or less, 300 µm or less, or 250 µm or less.

According to the invention, the gloss of the surface layer is not greater than 5.5 GU when the measurement angle is set to 60 degrees. In some embodiments, the surface gloss of the film is not greater than 5 GU or not greater than 4 GU at 60 degrees.

In one embodiment, the gloss of the surface layer is not greater than 0.6 GU at 20 degrees, not greater than 5.5 GU at 60 degrees, and not greater than

7 GU at 85 degrees. In some embodiments, the surface gloss of the film is not greater than 0.5 GU at 20 degrees, not greater than 5 GU at 60 degrees, and not greater than 6 GU at 85 degrees or not greater than 0.3 GU at 20 degrees, not greater than 4 GU at 60 degrees, and not greater than 5 GU at 85 degrees. When the surface gloss of the film is a combination of the ranges described above, the reflection of incident light from various angles on the film can be suppressed, and the decoration of the film can be recognized from a wide range of viewing angles.

In some embodiments, the lightness L* of the film is not greater than 27, not greater than 26.5, or not greater than 26 when measured using a spectrophotometer with a light source D65/10°, specular reflection treatment SCI, and UV reflection 0%.

In some embodiments, when the lightness of the film before stretching is L*₁, the lightness after 150% stretching is L*₂, and the difference of lightness is ΔL* = L*₂ - L*₁, the difference of lightness ΔL* is 5.5 or less, 5 or less, or 4 or less. In this embodiment, whitening of the film when the film is stretched can be suppressed. Therefore, when the film is applied to the surface by bending or stretching, the decorative characteristics of the film can be maintained at the bent portion or stretched portion.

The use of the film of the present disclosure is not particularly limited. For example, the film of the present disclosure can be used as interior materials such as walls, stairs, ceilings, pillars, and partitions, or exterior materials such as outer walls, of buildings, such as buildings, apartments, or houses. Furthermore, the stretchable film can be also used as interior or exterior of various transportation vehicles such as railway vehicles, vessels, aircrafts, automobiles including two-wheeled vehicles, and four-wheeled vehicles. Furthermore, the stretchable film can be also used as covering materials for various articles, such as traffic signs, signboards, furniture, and electrical appliances. The film of the present disclosure can be suitably used for adhesion to interior materials or exterior materials of buildings or vehicles.

### Examples

In the following examples, specific embodiments of the present disclosure are described as examples, but the present disclosure is not limited to these embodiments. All "parts" and "percent" are based on mass unless specified otherwise. The numerical values essentially include errors derived from the measurement principles and measuring devices. The numerical values are generally indicated by significant figures that have been rounded.

Materials and reagents used in the present examples are shown in Table 1.

### [Table 1]

**Table 1**

| Name or abbreviation | Description | Supplier |
|---|---|---|
| Art pearl C-1000 | Urethane resin beads, average particle diameter: 3 µm | Negami Chemical Industrial Co., Ltd. (Nomi-shi, Ishikawa, Japan) |
| Art pearl CE-800T | Urethane resin beads, average particle diameter: 6 µm | Negami Chemical Industrial Co., Ltd. (Nomi-shi, Ishikawa, Japan) |
| Art pearl CE-400T | Urethane resin beads, average particle diameter: 15 µm | Negami Chemical Industrial Co., Ltd. (Nomi-shi, Ishikawa, Japan) |
| Art pearl C-300 | Urethane resin beads, average particle diameter: 22 µm | Negami Chemical Industrial Co., Ltd. (Nomi-shi, Ishikawa, Japan) |
| Art pearl C-200 | Urethane resin beads, average particle diameter: 32 µm | Negami Chemical Industrial Co., Ltd. (Nomi-shi, Ishikawa, Japan) |
| Art pearl G-800 | Acrylic resin beads, average particle diameter: 6 µm | Negami Chemical Industrial Co., Ltd. (Nomi-shi, Ishikawa, Japan) |
| ALUNABEADS (trade name) CB-A09S | Alumina spherical particles, average particle diameter: 9 µm, modified Mohs hardness: 11 | Showa Denko K.K. (Minato-ku, Tokyo, Japan) |
| ALUNABEADS (trade name) CB-A20S | Alumina spherical particles, average particle diameter: 20 µm, modified Mohs hardness: 11 | Showa Denko K.K. (Minato-ku, Tokyo, Japan) |
| ALUNABEADS (trade name) CB-A30S | Alumina spherical particles, average particle diameter: 30 µm, modified Mohs hardness: 11 | Showa Denko K.K. (Minato-ku, Tokyo, Japan) |
| ALUNABEADS (trade name) CB-P40 | Alumina spherical particles, average particle diameter: 40 µm, modified Mohs hardness: 11 | Showa Denko K.K. (Minato-ku, Tokyo, Japan) |
| ALUNABEADS (trade name) CB-A50S | Alumina spherical particles, average particle diameter: 50 µm, modified Mohs hardness: 11 | Showa Denko K.K. (Minato-ku, Tokyo, Japan) |
| MIBK ST L | Nanosilica particles, average particle diameter: 40 to 50 nm, 30 mass% 4-methyl-2-pentanone (MIBK) dispersion liquid | Nissan Chemical Industries, Ltd. (Chiyoda-ku, Tokyo, Japan) |
| T5652 | Polycarbonate diol, OH value: 51 to 61 mgKOH/g, viscosity: 7000 to 16000 mPa·s (50°C) | Asahi Kasei Corporation (Chiyoda-ku, Tokyo, Japan) |
| MCPV-12 | Hydroxy group-containing polyurethane, 30 mass% methyl ethyl ketone solution, 2500 mPa·s (25°C) | Tosoh Corporation (Minatoku, Tokyo, Japan) |
| CAB-381-20 | Cellulose acetate butyrate | Eastman Chemical Company (Kingsport, Tennessee, United States) |
| SILCLEAN 3700 | Hydroxy group-containing silicone-modified polymer | BYK Japan KK (Shinjukuku, Tokyo, Japan) |
| MEGAFACE F563 | Fluorine group-containing/hydrophilic group-containing oligomer | DIC Corporation (Itabashiku, Tokyo, Japan) |
| D131N | Xylylene diisocyanate | Mitsui Chemicals, Inc. (Minato-ku, Tokyo, Japan) |
| CORONATE HX | Hexamethylene diisocyanate | Tosoh Corporation (Minatoku, Tokyo, Japan) |
| MPA | 1-Methoxy-2-propyl acetate, solvent | Sigma-Aldrich Co. LLC (Saint Louis, Missouri, United States) |
| MIBK | 4-Methyl-2-pentanone, solvent | Wako Pure Chemical Industries, Ltd. (Chuo-ku, Osaka, Japan) |

### Transparent resin substrate layer

To a polyvinyl chloride film having a thickness of 80 µm, a polyethylene terephthalate (PET) film was heat-laminated in advance to obtain a transparent resin substrate layer. The composition of the polyvinyl chloride film was polyvinyl chloride/ester plasticizer/organic stabilizer (acrylic resin, zinc stearate, and the like) = 72/16/12 (mass ratio). The PET film was Teijin (trade name) Tetoron (trade name) Film G2 (available from Teijin Film Solutions Limited, Chiyoda-ku, Tokyo, Japan) having a thickness of 50 µm.

### Example 1

A surface coating composition was obtained by agitating a mixture having the composition shown in Table 2, containing urethane resin beads, alumina spherical particles, nanosilica particles, and a binder resin, for 3.5 minutes using a Planetary Centrifugal Mixer THINKY AR-250 (available from Thinky Corporation, Chiyoda-ku, Tokyo, Japan). A polyvinyl chloride film of a transparent resin substrate layer was coated with the surface coating composition so that the gap was 60 µm using a knife coater. The coated film was dried and heat-cured in an oven at a temperature of 65°C for 2 minutes and in an oven at a temperature of 120°C for 5 minutes to form a surface layer having a dry thickness of approximately 30 µm. The PET film was separated from the transparent resin substrate layer, laminated with a polyvinyl chloride film including a surface layer and a black polyvinyl chloride film (polyvinyl chloride/ester plasticizer/organic stabilizer, pigment and the like (acrylic resin, zinc stearate, carbon black, and the like) = 72/16/12 (mass ratio)) having a thickness of 80 µm, and pressed using a heat processing roll under conditions at a line speed of 7 m/min, a nip pressure of 0.2 MPa, and a temperature at 60°C to obtain a film.

### Examples 2 to 4

Films were obtained by preparing a surface coating composition in the same manner as in Example 1 with the exception that the mass ratio of the urethane resin beads and the alumina spherical particles was modified as shown in Table 2 without any change to the total content of urethane resin beads and alumina spherical particles.

### Examples 5 to 7

Films were obtained by preparing a surface coating composition in the same manner as in Example 1 with the exception that the mass ratio of the urethane resin beads and the alumina spherical particles with respect to the binder was modified as shown in Table 2 without any modification to the mass ratio of the urethane resin beads and the alumina spherical particles.

### Examples 8 to 10

Films were obtained by preparing a surface coating composition in the same manner as in Example 1 with the exception that the average particle diameter of the alumina spherical particles was modified.

### Examples 11 to 13

Films were obtained by preparing a surface coating composition in the same manner as in Example 1 with the exception that the average particle diameter of the urethane resin beads was modified.

### Examples 14 to 16

Films were obtained by preparing a surface coating composition in the same manner as in Example 1 while modifying the mass ratio of the nanosilica particles with respect to the binder and the corresponding mass ratio of the urethane resin beads and the alumina spherical particles with respect to the binder as shown in Table 2.

### Comparative Example 1

A film was obtained by preparing a surface coating composition in the same manner as in Example 1 with the formula shown in Table 2 without using urethane resin beads.

### Comparative Example 2

A film was obtained by preparing a surface coating composition in the same manner as in Example 1 with the formula shown in Table 2 without using alumina spherical particles.

### Comparative Examples 3 and 4

Films were obtained by preparing a surface coating composition in the same manner as in Example 1 with the exception that the mass ratio of the urethane resin beads and the alumina spherical particles with respect to the binder was modified as shown in Table 2 without any modification to the mass ratio of the urethane resin beads and the alumina spherical particles.

### Comparative Example 5

A film was obtained by preparing a surface coating composition in the same manner as in Example 1 with the exception that the average particle diameter of the alumina spherical particles was modified.

### Comparative Example 6

A film was obtained by preparing a surface coating composition in the same manner as in Example 1 with the exception that the average particle diameter of the urethane resin beads was modified.

### Comparative Example 7

A film was obtained by preparing a surface coating composition in the same manner as in Example 1 with the exception that the urethane resin beads were changed to acrylic resin beads.

### Comparative Example 8

A film was obtained by preparing a surface coating composition in the same manner as in Example 1 with the formula shown in Table 2 without using nanosilica particles.

### Comparative Example 9

A Film was obtained by preparing a surface coating composition in the same manner as in Example 1 while modifying the mass ratio of the nanosilica particles with respect to the binder and the corresponding mass ratio of the urethane resin beads and the alumina spherical particles with respect to the binder as shown in Table 2.

### Comparative Example 10

A film was obtained by preparing a surface coating composition in the same manner as in Example 1 with the formula shown in Table 2 without using urethane resin beads or nanosilica particles.

**Table 2-1**

| Table 2 | | | | | | | | | |
|---|---|---|---|---|---|---|---|---|---|
| | Example 1 | Example 2 | Example 3 | Example 4 | Example 5 | Example 6 | Example 7 | Example 8 | Example 9 |
| C-1000 | - | - | - | - | - | - | - | - | - |
| CE-800T | 3.77 | 1.89 | 7.54 | 11.31 | 4.56 | 5.37 | 6.19 | 3.77 | 3.77 |
| CE-400T | - | - | - | - | - | - | - | - | - |
| C-300 | - | - | - | - | - | - | - | - | - |
| C-200 | - | - | - | - | - | - | - | - | - |
| G-800 | - | - | - | - | - | - | - | - | - |
| CB-A09S | - | - | - | - | - | - | - | 15.08 | - |
| CB-A20S | - | - | - | - | - | - | - | - | 15.08 |
| CB-A30S | 15.08 | 16.97 | 11.31 | 7.54 | 18.25 | 21.48 | 24.76 | - | - |
| CB-P40 | - | - | - | - | - | - | - | - | - |
| CB-A50S | - | - | - | - | - | - | - | - | - |
| MIBKSTL | 18.85 | 18.85 | 18.85 | 18.85 | 15.21 | 11.51 | 7.74 | 18.85 | 18.85 |
| T5652 | 10.56 | 10.56 | 10.56 | 10.56 | 8.52 | 6.44 | 4.33 | 10.56 | 10.56 |
| MCPV-12 | - | - | - | - | - | - | - | - | - |
| CAB-381-20 | 2.64 | 2.64 | 2.64 | 2.64 | 2.13 | 1.61 | 1.08 | 2.64 | 2.64 |
| SILCLEAN3700 | 1.51 | 1.51 | 1.51 | 1.51 | 1.52 | 1.53 | 1.55 | 1.51 | 1.51 |
| MEGAFACEF563 | - | - | - | - | - | - | - | - | - |
| D131N | 4.22 | 4.22 | 4.22 | 4.22 | 3.41 | 2.58 | 1.73 | 4.22 | 4.22 |
| CORONATEHX | - | - | - | - | - | - | - | - | - |
| MPA | 43.36 | 43.36 | 43.36 | 43.36 | 46.39 | 49.48 | 52.62 | 43.36 | 43.36 |
| MIBK | - | - | - | - | - | - | - | - | - |
| Urethane resin beads/hard particles | 20/80 | 10/90 | 40/60 | 60/40 | 20/80 | 20/80 | 20/80 | 20/80 | 20/80 |
| Nanosilica particles/binder × 100 | 43 | 43 | 43 | 43 | 43 | 43 | 43 | 43 | 43 |
| Urethane resin beads/binder × 100 | 29 | 14 | 57 | 86 | 43 | 67 | 114 | 29 | 29 |
| Hard particles/binder × 100 | 114 | 129 | 86 | 57 | 171 | 267 | 457 | 114 | 114 |

**Table 2-2**

| (Continuation of Table 2) | | | | | | | | | |
|---|---|---|---|---|---|---|---|---|---|
| | Example 10 | Example 11 | Example 12 | Example 13 | Example 14 | Example 15 | Example 16 | Comparative Example 1 | Comparative Example 2 |
| C-1000 | - | 3.77 | - | - | - | - | - | - | - |
| CE-800T | 3.77 | - | - | - | 3.79 | 3.84 | 3.89 | - | 18.85 |
| CE-400T | - | - | 3.77 | - | - | - | - | - | - |
| C-300 | - | - | - | 3.77 | - | - | - | - | - |
| C-200 | - | - | - | - | - | - | - | - | - |
| G-800 | - | - | - | - | - | - | - | - | - |
| CB-A09S | - | - | - | - | - | - | - | - | - |
| CB-A20S | - | - | - | - | - | - | - | - | - |
| CB-A30S | - | 15.08 | 15.08 | 15.08 | 15.17 | 15.36 | 15.55 | 18.85 | - |
| CB-P40 | 15.08 | - | - | - | - | - | - | - | - |
| CB-A50S | - | - | - | - | - | - | - | - | - |
| MIBK ST L | 18.85 | 18.85 | 18.85 | 18.85 | 25.29 | 38.40 | 51.84 | 18.85 | 18.85 |
| T5652 | 10.56 | 10.56 | 10.56 | 10.56 | 9.10 | 6.14 | 3.11 | 10.56 | 10.56 |
| MCPV-12 | - | - | - | - | - | - | - | - | - |
| CAB-381-20 | 2.64 | 2.64 | 2.64 | 2.64 | 2.28 | 1.54 | 0.78 | 2.64 | 2.64 |
| SILCLEAN 3700 | 1.51 | 1.51 | 1.51 | 1.51 | 1.52 | 1.54 | 1.56 | 1.51 | 1.51 |
| MEGAFACE F563 | - | - | - | - | - | - | - | - | - |
| D131N | 4.22 | 4.22 | 4.22 | 4.22 | 3.64 | 2.46 | 1.24 | 4.22 | 4.22 |
| CORONATE HX | - | - | - | - | - | - | - | - | - |
| MPA | 43.36 | 43.36 | 43.36 | 43.36 | 39.20 | 30.72 | 22.03 | 43.36 | 43.36 |
| MIBK | - | - | - | - | - | - | - | - | - |
| Urethane resin beads/hard particles | 20/80 | 20/80 | 20/80 | 20/80 | 20/80 | 20/80 | 20/80 | 0/100 | 100/0 |
| Nanosilica particle s/binder × 100 | 43 | 43 | 43 | 43 | 67 | 150 | 400 | 43 | 43 |
| Urethane resin beads/binder × 100 | 29 | 29 | 29 | 29 | 33 | 50 | 100 | 0 | 143 |
| Hard particle s/binder × 100 | 114 | 114 | 114 | 114 | 133 | 200 | 400 | 143 | 0 |

**Table 2-3**

| (Continuation of Table 2) | | | | | | | | |
|---|---|---|---|---|---|---|---|---|
| | Comparative Example 3 | Comparative Example 4 | Comparative Example 5 | Comparative Example 6 | Comparative Example 7 | Comparative Example 8 | Comparative Example 9 | Comparative Example 10 |
| C-1000 | - | - | - | - | - | - | - | - |
| CE-800T | 1.47 | 2.22 | 3.77 | - | - | 4.00 | 3.75 | - |
| CE-400T | - | - | - | - | - | - | - | - |
| C-300 | - | - | - | - | - | - | - | - |
| C-200 | - | - | - | 3.77 | - | - | - | - |
| G-800 | - | - | - | - | 3.77 | - | - | - |
| CB-A09S | - | - | - | - | - | - | - | - |
| CB-A20S | - | - | - | - | - | - | - | - |
| CB-A30S | 5.88 | 8.90 | - | 15.08 | 15.08 | 15.99 | 14.99 | 12.71 |
| CB-P40 | - | - | - | - | - | - | - | - |
| CB-A50S | - | - | 15.08 | - | - | - | - | - |
| MIBK ST L | 29.42 | 25.96 | 18.85 | 18.85 | 18.85 | - | 12.49 | - |
| T5652 | 16.48 | 14.54 | 10.56 | 10.56 | 10.56 | 11.19 | 11.99 | - |
| MCPV-12 | - | - | - | - | - | - | - | 50.22 |
| CAB-381-20 | 4.12 | 3.63 | 2.64 | 2.64 | 2.64 | 2.80 | 3.00 | - |
| SILCLEAN 3700 | 1.47 | 1.48 | 1.51 | 1.51 | 1.51 | 1.60 | 1.50 | - |
| MEGAFACE F563 | - | - | - | - | - | - | - | 0.37 |
| D131N | 6.59 | 5.81 | 4.22 | 4.22 | 4.22 | 4.48 | 4.80 | - |
| CORONATE HX | - | - | - | - | - | - | - | 3.59 |
| MPA | 34.57 | 37.45 | 43.36 | 43.36 | 43.36 | 59.95 | 47.48 | - |
| MIBK | - | - | - | - | - | - | - | 33.11 |
| Urethane resin beads¹⁾/ hard particles | 20/80 | 20/80 | 20/80 | 20/80 | 20/80 | 20/80 | 20/80 | 0/100 |
| Nanosilica particles/ binder × 100 | 43 | 43 | 43 | 43 | 43 | 0 | 25 | 0 |
| Urethane resin beads¹⁾/binder × 100 | 7 | 12 | 29 | 29 | 29 | 29 | 25 | 0 |
| Hard particles/ binder × 100 | 29 | 49 | 114 | 114 | 114 | 114 | 100 | 84 |

| | | | | | | | | |
|---|---|---|---|---|---|---|---|---|
| 1) In only Comparative Example 7, the ratio of acrylic resin beads to hard particles or a binder is shown. | | | | | | | | |

### Gloss

The gloss of the surface layer was measured at the measurement angles of 20°/60°/85° using a portable glossmeter BYK-Gardner micro-TRI-gloss (available from BYK Japan KK, Shinjuku-ku, Tokyo, Japan). When the gloss at 60° was 5.5 GU or less, the sample was evaluated as satisfying practical low gloss requirements. Furthermore, when the three conditions of having a gloss of 0.6 GU or less at a measurement angle of 20°, 5.5 GU or less at 60°, and 6.5 GU or less at 85° were satisfied, the sample was evaluated as having an excellent low gloss surface appearance.

### Surface color measurement

The lightness L* values were measured using a spectrophotometer CM-3700d (available from Konica Minolta Japan, Inc., Minato-ku, Tokyo, Japan) with a light source D65/10°, specular reflection treatment SCI, and UV reflection 0%. When the lightness L* value was 27 or less, the surface was evaluated as having low gloss and excellent lightness.

### Lightness L* after 150% stretching

Samples that were cut to 150 mm × 15 mm in advance were fixed to a chuck at both ends at positions 25 mm from the ends and, for a measurement length of 100 mm, subjected to 150% stretching using a Tensilon Universal Material Testing Instrument RTC-1210A (available from A&D Company, Limited, Toshima-ku, Tokyo, Japan) at a rate of 100 mm/min in an environment at a temperature of 20°C and a relative humidity of 60%. Surface colors of the samples after the stretching were measured. The difference of lightness ΔL* was calculated, where the lightness of the film before stretching is L*₁, the lightness after 150% stretching is L*₂, and the difference of lightness ΔL* = L*₂ - L*₁. When the difference of lightness ΔL* was 5.5 or less, the loss in low gloss (whitening) due to stretching was evaluated as being small.

### Scratch resistance

Scratch resistance was evaluated under conditions at a load of 1.7 kg and a pencil hardness of 9 H using a pencil hardness tester in accordance with JIS K5600-5-4:1999. Cases in which damage due to the cohesive failure of the surface layer was observed at a rate of 50% or less, excluding the initial region (length: 10 mm), after the film surface was scratched were evaluated as good, and cases in which such damage was observed at a rate of 50% or greater were evaluated as poor.

The evaluation results of the films of Examples 1 to 16 and Comparative Examples 1 to 11 are shown in Table 3.

**Table 3**

| | Surface gloss (GU) | | | L*₁ | L*₂ | ΔL* | Scratch resistance |
|---|---|---|---|---|---|---|---|
| | 20° | 60° | 85° | | | | |
| Example 1 | 0.5 | 4.8 | 4.6 | 26.6 | 29.5 | 2.9 | Good |
| Example 2 | 0.6 | 5.4 | 5.9 | 26.9 | 30.1 | 3.3 | Good |
| Example 3 | 0.3 | 3.4 | 3.9 | 26.1 | 28.6 | 2.4 | Good |
| Example 4 | 0.2 | 2.3 | 3.2 | 25.6 | 27.9 | 2.3 | Good |
| Example 5 | 0.2 | 2.3 | 2.2 | 26.6 | 31.1 | 4.5 | Good |
| Example 6 | 0.1 | 1.1 | 1.4 | 25.7 | 30.9 | 5.2 | Good |
| Example 7 | 0.1 | 0.5 | 1.3 | 24.4 | 31.4 | 7.0 | Good |
| Example 8 | 0.5 | 5.1 | 7.7 | 27.0 | 34.4 | 7.4 | Good |
| Example 9 | 0.5 | 5.2 | 5.3 | 26.1 | 29.3 | 3.2 | Good |
| Example 10 | 0.5 | 5.3 | 6.6 | 26.6 | 30.0 | 3.5 | Good |
| Example 11 | 0.4 | 4.4 | 4.2 | 26.8 | 30.4 | 3.5 | Good |
| Example 12 | 0.6 | 4.6 | 3.4 | 26.5 | 30.3 | 3.8 | Good |
| Example 13 | 0.5 | 5.2 | 3.0 | 26.0 | 29.2 | 3.2 | Good |
| Example 14 | 0.4 | 3.5 | 4.3 | 26.0 | 29.3 | 3.3 | Good |
| Example 15 | 0.1 | 2.0 | 2.5 | 24.6 | 29.9 | 5.3 | Good |
| Example 16 | 0.1 | 1.6 | 2.5 | 22.4 | 37.7 | 15.3 | Good |
| Comparative Example 1 | 1.2 | 9.8 | 10.0 | 26.5 | 30.3 | 3.8 | Good |
| Comparative Example 2 | 0.1 | 0.7 | 2.8 | 23.3 | 26.6 | 3.3 | Poor |
| Comparative Example 3 | 2.7 | 19.3 | 26.5 | 25.2 | 26.9 | 1.7 | Poor |
| Comparative Example 4 | 2.0 | 15.1 | 17.3 | 26.0 | 28.7 | 2.7 | Good |
| Comparative Example 5 | 0.6 | 6.0 | 7.9 | 26.3 | 28.9 | 2.6 | Good |
| Comparative Example 6 | 0.7 | 5.9 | 4.3 | 25.8 | 29.4 | 3.6 | Good |
| Comparative Example 7 | 0.8 | 7.3 | 8.2 | 26.4 | 34.8 | 8.4 | Good |
| Comparative Example 8 | 0.9 | 8.3 | 7.0 | 26.6 | 30.6 | 4.0 | Good |
| Comparative Example 9 | 1.1 | 9.2 | 9.2 | 26.1 | 29.5 | 3.4 | Good |
| Comparative Example 10 | 4.8 | 26.7 | 27.0 | 25.5 | 28.2 | 2.7 | Good |

### Reference Signs List

100 Film
10 Surface layer
12 Binder
14 Urethane resin bead
16 Hard particle
18 Nanosilica particle
20 Substrate layer

## Claims

1. A scratch resistant film comprising a surface layer, the surface layer comprising:
a binder comprising a urethane resin;
urethane resin beads having an average particle diameter of 3 µm to 30 µm;
hard particles having an average particle diameter of 5 µm to 45 µm, and a modified Mohs hardness of 7 or more but 15 or less; and
nanosilica particles ;
wherein
the surface layer comprises from 30 parts by mass to 500 parts by mass of the hard particles based on 100 parts by mass of the binder, from 13 parts by mass to 120 parts by mass of the urethane resin beads based on 100 parts by mass of the binder, and from 30 parts by mass to 500 parts by mass of the nanosilica particles based on 100 parts by mass of the binder;
and the gloss of the surface layer, measured as outlined in the description is 5.5 GU or less at 60 degrees.

2. The scratch resistant film according to claim 1, wherein the average particle diameter of the nanosilica particles is from 10 nm to 100 nm.

3. The scratch resistant film according to claim 1 or 2, wherein the hard particles comprise alumina beads.

4. The scratch resistant film according to any one of claims 1 to 3, wherein when a lightness of the scratch resistant film before being stretched is defined as L*₁, a lightness of the scratch resistant film after being stretched to 150% is defined as L*₂, and a difference in lightness L*₂ - L*₁ is defined as ΔL*, the difference in lightness ΔL* is 5.5 or less, the lightness being measured as outlined in the description.

5. The scratch resistant film according to any one of claims 1 to 4, wherein the gloss of the surface layer is 0.6 GU or less at 20 degrees, 5.5 GU or less at 60 degrees, and 7 GU or less at 85 degrees, the gloss being measured as outlined in the description.

6. The scratch resistant film according to any one of claims 1 to 5, wherein the binder further comprises a cellulose ester.

7. The scratch resistant film according to any one of claims 1 to 6, wherein the urethane resin comprises a cured product of a two-part urethane resin composition.

8. The scratch resistant film according to any one of claims 1 to 7, wherein the surface layer further comprises a silicone-modified polymer having a functional group capable of reacting with isocyanates or a hydroxyl group.

9. The scratch resistant film according to any one of claims 1 to 8, further comprising a stretchable substrate layer.

10. The scratch resistant film according to claim 9, wherein the substrate layer is colored or colorless, and opaque, translucent or transparent, and has a generally flat and smooth surface or structured surface.

11. The scratch resistant film according to claim 9 or 10, wherein the substrate layer comprises a layer comprising at least one resin selected from the group consisting of polyvinyl chloride, polyurethane, polyethylene, polypropylene, vinyl chloride-vinyl acetate resins, acrylic resins, cellulose resins, and fluorinated resins.

12. The scratch resistant film according to any one of claims 9 to 11, wherein the substrate layer comprises a transparent polyvinyl chloride resin layer and a colored polyvinyl chloride resin layer.

13. The scratch resistant film according to any one of claims 1 to 12, adapted to be applied to an interior or exterior material of a construction or vehicle.

## Patentansprüche

1. Eine kratzfeste Folie, umfassend eine Oberflächenschicht, wobei die Oberflächenschicht umfasst:
ein Bindemittel, umfassend ein Urethanharz;
Urethanharzperlen, die einen mittleren Teilchendurchmesser von 3 µm bis 30 µm aufweisen;
harte Teilchen, die einen mittleren Teilchendurchmesser von 5 µm bis 45 µm und eine modifizierte Mohshärte von 7 oder mehr, jedoch 15 oder weniger, aufweisen; und
Nanosiliciumdioxidteilchen;
wobei
die Oberflächenschicht von 30 Massenteile bis 500 Massenteile der harten Teilchen, basierend auf 100 Massenteilen des Bindemittels, von 13 Massenteile bis 120 Massenteile der Urethanharzperlen, basierend auf 100 Massenteilen des Bindemittels, und von 30 Massenteile bis 500 Massenteile der Nanosiliciumdioxidteilchen, basierend auf 100 Massenteilen des Bindemittels, umfasst;
und der Glanz der Oberflächenschicht, wie in der Beschreibung angegeben gemessen, bei 60 Grad 5,5 GU oder weniger beträgt.

2. Die kratzfeste Folie nach Anspruch 1, wobei der mittlere Teilchendurchmesser der Nanosiliciumdioxidteilchen von 10 nm bis 100 nm beträgt.

3. Die kratzfeste Folie nach Anspruch 1 oder 2, wobei die harten Teilchen Aluminiumoxidperlen umfassen.

4. Die kratzfeste Folie nach einem der Ansprüche 1 bis 3, wobei, wenn eine Helligkeit der kratzfesten Folie, bevor sie gedehnt wird, als L*₁ definiert ist, eine Helligkeit der kratzfesten Folie, nachdem sie auf 150 % gedehnt wurde, als L*₂ definiert ist und eine Helligkeitsdifferenz L*₂ - L*₁ als ΔL* definiert ist, die Helligkeitsdifferenz ΔL* 5,5 oder weniger beträgt, wobei die Helligkeit, wie in der Beschreibung angegeben, gemessen wird.

5. Die kratzfeste Folie nach einem der Ansprüche 1 bis 4, wobei der Glanz der Oberflächenschicht bei 20 Grad 0,6 GU oder weniger, bei 60 Grad 5,5 GU oder weniger und bei 85 Grad 7 GU oder weniger beträgt, wobei der Glanz, wie in der Beschreibung angegeben, gemessen wird.

6. Die kratzfeste Folie nach einem der Ansprüche 1 bis 5, wobei das Bindemittel ferner einen Celluloseester umfasst.

7. Die kratzfeste Folie nach einem der Ansprüche 1 bis 6, wobei das Urethanharz ein gehärtetes Produkt einer zweiteiligen Urethanharzzusammensetzung umfasst.

8. Die kratzfeste Folie nach einem der Ansprüche 1 bis 7, wobei die Oberflächenschicht ferner ein silikonmodifiziertes Polymer umfasst, das eine funktionelle Gruppe, die in der Lage ist, mit Isocyanaten zu reagieren, oder eine Hydroxylgruppe aufweist.

9. Die kratzfeste Folie nach einem der Ansprüche 1 bis 8, ferner umfassend eine dehnbare Substratschicht.

10. Die kratzfeste Folie nach Anspruch 9, wobei die Substratschicht farbig oder farblos und undurchsichtig, durchscheinend oder transparent ist und eine grundsätzlich flache und glatte Oberfläche oder eine strukturierte Oberfläche aufweist.

11. Die kratzfeste Folie nach einem der Ansprüche 9 oder 10, wobei die Substratschicht eine Schicht umfasst, die mindestens ein Harz, ausgewählt aus der Gruppe bestehend aus Polyvinylchlorid, Polyurethan, Polyethylen, Polypropylen, Vinylchlorid-Vinylacetatharzen, Acrylharzen, Celluloseharzen und fluorierten Harzen, umfasst.

12. Die kratzfeste Folie nach einem der Ansprüche 9 bis 11, wobei die Substratschicht eine transparente Polyvinylchloridharzschicht und eine farbige Polyvinylchloridharzschicht umfasst.

13. Die kratzfeste Folie nach einem der Ansprüche 1 bis 12, die angepasst ist, um auf ein Innen- oder ein Außenmaterial eines Bauwerks oder eines Fahrzeugs aufgebracht zu werden.

## Revendications

1. Film résistant aux rayures comprenant une couche superficielle, la couche superficielle comprenant :
un liant comprenant une résine uréthane ;
des perles de résine uréthane ayant un diamètre particulaire moyen de 3 µm à 30 µm ;
des particules dures ayant un diamètre particulaire moyen de 5 µm à 45 µm, et une dureté de Mohs modifiée de 7 ou plus, mais de 15 ou moins ; et
des particules de nanosilice ;
dans lequel
la couche superficielle comprend de 30 parties en masse à 500 parties en masse des particules dures en fonction de 100 parties en masse du liant, de 13 parties en masse à 120 parties en masse des perles de résine uréthane en fonction de 100 parties en masse du liant, et de 30 parties en masse à 500 parties en masse des particules de nanosilice en fonction de 100 parties en masse du liant ;
et la brillance de la couche superficielle, mesurée comme décrit dans la description, est de 5,5 GU ou moins à 60 degrés.

2. Film résistant aux rayures selon la revendication 1, dans lequel le diamètre particulaire moyen des particules de nanosilice va de 10 nm à 100 nm.

3. Film résistant aux rayures selon la revendication 1 ou 2, dans lequel les particules dures comprennent des perles d'alumine.

4. Film résistant aux rayures selon l'une quelconque des revendications 1 à 3, dans lequel, lorsqu'une clarté du film résistant aux rayures avant d'être étiré est définie en tant que L*₁, une clarté du film résistant aux rayures après avoir été étiré à 150 % est définie en tant que L*₂, et une différence de clarté L*₂ - L*₁ est définie en tant que ΔL*, la différence de clarté ΔL* est de 5,5 ou moins, la clarté étant mesurée comme décrit dans la description.

5. Film résistant aux rayures selon l'une quelconque des revendications 1 à 4, dans lequel la brillance de la couche superficielle est de 0,6 GU ou moins à 20 degrés, de 5,5 GU ou moins à 60 degrés, et de 7 GU ou moins à 85 degrés, la brillance étant mesurée comme décrit dans la description.

6. Film résistant aux rayures selon l'une quelconque des revendications 1 à 5, dans lequel le liant comprend en outre un ester de cellulose.

7. Film résistant aux rayures selon l'une quelconque des revendications 1 à 6, dans lequel la résine uréthane comprend un produit durci d'une composition de résine uréthane en deux parties.

8. Film résistant aux rayures selon l'une quelconque des revendications 1 à 7, dans lequel la couche superficielle comprend en outre un polymère à modification silicone ayant un groupe fonctionnel capable de réagir avec des isocyanates ou un groupe hydroxyle.

9. Film résistant aux rayures selon l'une quelconque des revendications 1 à 8, comprenant en outre une couche de substrat étirable.

10. Film résistant aux rayures selon la revendication 9, dans lequel la couche de substrat est colorée ou incolore, et opaque, translucide ou transparente, et a une surface généralement plate et lisse ou une surface structurée.

11. Film résistant aux rayures selon la revendication 9 ou 10, dans lequel la couche de substrat comprend une couche comprenant au moins une résine choisie dans le groupe constitué de poly(chlorure de vinyle), polyuréthane, polyéthylène, polypropylène, résines de chlorure de vinyle-acétate de vinyle, résines acryliques, résines de cellulose et résines fluorées.

12. Film résistant aux rayures selon l'une quelconque des revendications 9 à 11, dans lequel la couche de substrat comprend une couche de résine de poly(chlorure de vinyle) transparente et une couche de résine de poly(chlorure de vinyle) colorée.

13. Film résistant aux rayures selon l'une quelconque des revendications 1 à 12, conçu pour être appliqué sur un matériau intérieur ou extérieur d'une construction ou d'un véhicule.
